# EUROPEAN PATENT APPLICATION

(11) **EP 3 779 251 A1**
(43) Date of publication of application: **17.02.2021**
(21) Application number: 20191188.0
(22) Date of filing: 14.08.2020
(51) Int. Cl.: F16K 5/06, F16J 15/18, F16J 15/20, F16K 41/02, F16J 15/30

(54) **VALVE WITH SEALING SYSTEM**

(30) Priority: 16.08.2019 GB 201911774; 16.01.2020 GB 202000682
(71) Applicant: Oliver Twinsafe Valves Limited, Knutsford, Cheshire WA16 8DX (GB)
(72) Inventor: HOWARD, Nicholas Alexander, Knutsford, Cheshire WA16 8DX (GB)
(74) Representative: Mewburn Ellis LLP

(57) **Abstract**

A valve system for regulation of a fluid, the valve system comprising: a body defining a passageway; an actuator for actuation through the passageway of a valve element to regulate said fluid flow though the valve; and a sealing system arranged to seal between the body and actuator, wherein the sealing system includes a layered arrangement comprising one or more repeating units, each repeating unit comprising a first layer of graphite based material and an adjacent second layer of a plastic based material, the plastic based material having a lower permeability than the graphite based material.

## Description

### TECHNICAL FIELD

The present disclosure relates to sealing of valve actuators, the valves for regulating high pressure or temperature fluid flow.

### BACKGROUND

Valves include an actuator, which may also be referred to as a stem or plunger, for actuation of a valve element. The actuator requires fluidically sealing in respect of a body of the valve. Sealing systems implement a sealing material, which is arranged between the actuator and body.

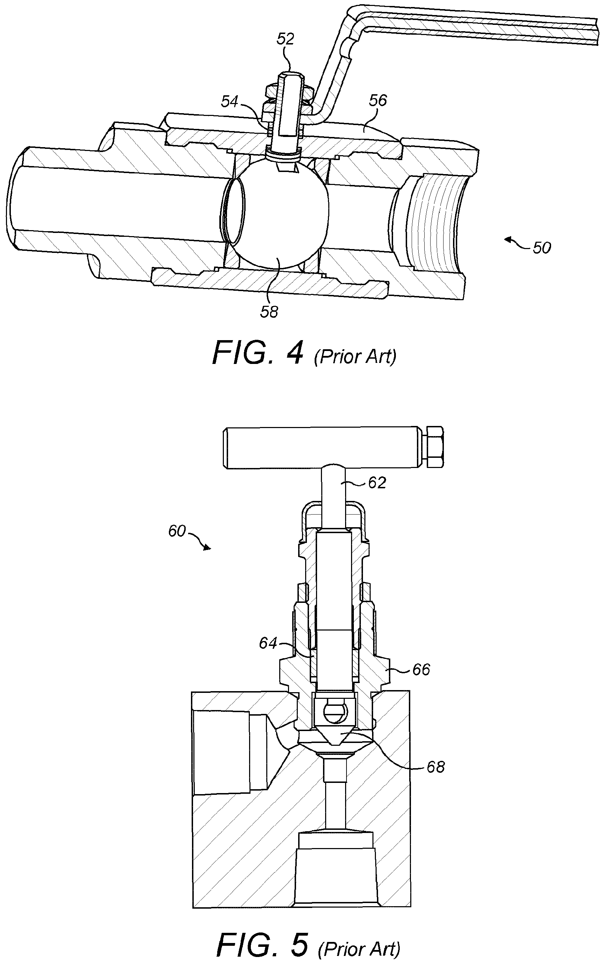

Referring to figure 4, a conventional ball valve **50** is illustrated. The actuator **52** includes grooves for receipt of a sealing material **54,** to seal against body **56.** The actuator **52** actuates a ball **58** implementation of the valve element.

Referring to figure 5, a conventional needle valve **60** is illustrated. The stem **62** and body **66** have sealing material **64** arranged therebetween. The actuator **62** actuates a needle **68.** The actuator **62** actuates a needle **68** implementation of the valve element.

In some examples graphite is implemented as a sealing material. Graphite is suitable for use in applications where the temperature is above 250 degrees C. Graphite is also cost-effective.

However, it has been found that graphite exhibits seepage of the fluid at lower pressure than is desirable. For example, the maximum operating pressure of a graphite seal will be based on the composition of the fluid regulated through the valve. In particular, smaller molecules seep more than larger molecules and an acceptable level of seepage may be identified based on the nature of the fluid. For example, if the fluid comprises gaseous petrochemicals, small seepages are undesirable, and the maximum operating pressure may be restricted to 100 Bar. However, if the fluid is an inert gas, such as Nitrogen, then seepages are less of an issue and the operating pressure may be more than 100 Bar.

Consequently, for valves that implement a graphite sealing material, for regulation of hazardous fluids, the valve is often restricted a maximum operating pressure of 100 Bar.

In other examples, polytetrafluoroethylene (PTFE) is implemented as a sealing material. PTFE has improved fluidic sealing capability than graphite, thus enabling use of such a valve at a high pressure than a purely graphite based seal. However, it has been found that due to softening of the PTFE, the valve is restricted to applications where the temperature is below 250 degrees C.

Therefore, in spite of the effort already invested in the development of said sealing systems, further improvements are desirable.

### SUMMARY

The present disclosure provides a valve system for regulation of a fluid. The valve system comprises: a body defining a passageway; an actuator for actuation through the passageway of a valve element to regulate said fluid flow though the valve, and; a sealing system arranged to seal between the body and actuator.

In embodiments, the sealing system includes a layered arrangement comprising one or more repeating units, each repeating unit comprising a first layer of graphite based material and an directly adjacent second layer of a plastic based material.

In an exemplary embodiment, the sealing system includes one repeating unit. Here, the first layer of graphite based material is arranged on a fluid side and the directly adjacent second layer of plastic material is arranged on an outer side. Thus, the graphite layer provides fire protection and the second layer of plastic based material provides the seal resistance to fluid, such as gas, that in use may permeate through the graphite material.

The first layer of graphite based material may be a single block of material. However, preferably, the first layer of graphite based material is formed from a homogenous stack of two or more elements. For instance, two or more discs, wherein each of the discs is formed from the graphite based material. Advantageously, when the discs are assembled in the body and about the actuator, the discs are compressed or compacted. When compacting a single block of material the material tends to reach a higher degree of compression in an upper area than at a lower area. Thus, a greater compaction of the first graphite layer can be achieved by individually compacting multiple thinner discs than can be achieved by compacting fewer larger discs, or a single block. In an exemplary embodiment, the first layer of graphite based material therefore comprises a plurality of individual homogenous discs. In a particularly preferred embodiment, the first layer of graphite based material comprises at least four individual homogenous layers.

By implementing a stack that alternates between graphite and a plastic based material, both the advantageous features of high temperature capability and cost efficacy of the graphite are implemented. In embodiments, the plastic based material has a lower permeability than the graphite based material. By implementing a plastic based material with lower permeability than the graphite, a sealing material is implemented with the advantages of the graphite but with a higher sealing capacity than with the graphite alone. In other embodiments, other plastic based material may be implemented with the same or a higher permeability than graphite.

In exemplary embodiments, the plastic based material is suitably a polyimide-based plastic.

In embodiments, the plastic based material is selected to have a permeability coefficient as defined herein of less than 3 x 10⁻¹³ or 2 x 10⁻¹³ or 1 x 10⁻¹³ or most preferably 0.5 x 10⁻¹³ or about 0.1 x 10⁻¹³. With the plastic based material having such a permeability, for regulation of hazardous gasses the valve may be configured to operate with high pressure fluid, of above 100 or 200 Bar. The maximum pressure may be 300 Bar.

In embodiments, the plastic based material is selected to have a heat-deflection temperature as defined herein of above 100 or 150 or 200 or 300 degrees Celsius. With such an implementation, the valve is suitable for higher temperature applications than valves with a conventional PTFE sealing material. In this manner the valve system having the sealing system as herein described is configured to seal a fluid with a temperature of above 250 or above 300 or above 350 degrees Celsius.

In embodiments, the plastic based material has a hardness which is greater than the graphite based material. The hardness of the plastic based material may be about or greater than E 52 - 99 or E 45 - 105 on the Rockwell hardness scale.

Whilst the second layer of plastic based material may be formed of multiple homogenous elements, suitably, the second layer of plastic based material comprise a single element. The single element may be sized so as to compression fit between the body and the actuator, for instance after compaction. However, in a particularly suitable embodiment, the second layer of plastic is shaped to form a dome in a relaxed state. Here, the relaxed state is a state wherein the second layer is not compacted, or otherwise affected by substantial external forces. During assembly, as the second layer is compacted, a raised central portion of the layer is compressed causing an internal area of the layer through which the actuator passes to be caused to be restricted and the external area of the layer bounded by the housing to be caused to expand. Thus the sealing effectiveness is increased as the dome is compressed to a substantially planar state.

In exemplary embodiments including multiple repeating units, the layered arrangement may comprise an additional layer of graphite based material arranged directly adjacent a side of the plastic based material, which is not directly adjacent a layer of the graphite based material of the repeating unit, i.e. the layered arrangement comprises a layer of graphite at both first (i.e fluid side) and second (i.e. external side) ends thereof. By implementing said additional layer of graphite at the external side of the sealing system, the softer, more compliant graphite abuts the body of the valve and may seal around it better and/or enable a lower machining tolerance when forming the body when compared to the exterior side of the sealing system being formed from the second layer of a plastic based material. However, in a number of instances, it is envisaged that the exterior side of the sealing system would terminate in the second layer of plastics material.

In embodiments, the plastic based material is a polyimide-based plastic. In embodiments, the plastic based material is formed by compression moulding or extrusion. The plastic based material may be selected from the Vespel™ range of materials as supplied by DuPoint.

In embodiments, the polyimide-based plastic comprises 10 - 50 % or 15 - 40 % or about 15 % or about 40 % by weight of graphite. Graphite added to the polyimide may increase wear resistance. In embodiments, the polyimide-based plastic comprises 10 to 20 % or about 15 % by weight of PTFE. PTFE added to the polyimide may reduce wear friction for the movement of the actuator. In embodiments, the polyimide-based plastic comprises 10 to 20 % or about 15 % by weight of molybdenum disulfide solid lubricant. Molybdenum disulfide added to the polyimide may reduce wear and friction for the movement of the actuator.

In embodiments, the sealing system is arrange to seal valves that have actuators that rotate or reciprocate with respect to the passageway. The valve may therefore be arranged as a ball or needle valve. Thus according to the exemplary embodiments the first and second layers are formed as discs. Suitably the shape of the discs is sized so as to seal against the body and actuator respectively. Here, in the exemplary embodiments comprising a rotating actuator, suitably the discs include an internal aperture through which the actuator passes. It is envisaged the body would typically also include a circular bore within which the sealing system is located and thus the discs would include a corresponding external diameter. As introduced above, the second layer of plastics material may have square edges, that is, internal and external sealing faces may be arranged in a relaxed state to be substantially parallel to the surfaces of the body and actuator against which they seal. Alternatively, the second plastics layer may be domed, to have angled internal and external sealing faces. Suitably, the first graphite layer is arranged to have square edges. Thus, in the exemplary embodiments wherein the first graphite based layer is formed from a plurality of homogenous discs, each disc is substantially planar having internal and external sealing faces that are orthogonal to a planar direction.

In embodiments, the actuator has a diameter of at least 8 mm and up to 80 - 100 mm. In embodiment, the graphite based material is thicker than the plastic based material. The amount of the more expensive plastic based material can therefore be reduced. In embodiments, the graphite based material has a thickness of 3 mm to 10 mm. In embodiments, wherein the plastic based material has a thickness of 1 mm to 10 mm.

The present disclosure provides a method of manufacturing, including assembling a valve. The method comprises arranging a sealing system to seal between an actuator and a body, the sealing system comprising one or more repeating units, each repeating unit comprising a first layer of graphite based material and an adjacent second layer of a plastic based material. The method may implement the features of any preceding embodiment or another embodiment disclosed herein.

The sealing system is suitably as herein described. Thus, in an exemplary embodiment, the sealing system comprises a first layer of graphite based material formed from a plurality of homogenous discs. Here, the method step of arranging a sealing system to seal between the actuator and body comprises compacting each disc forming the layer of graphite based material individually. Furthermore, the method step of arranging a sealing system to seal between the actuator and body may comprise compacting a domed element to form the second layer of plastics based material.

The present disclosure provides a sealing system to fluidically seal between a first and second object, the sealing system including a layered arrangement comprising one or more repeating units, each repeating unit comprising a first layer of graphite based material and a directly adjacent second layer of a plastic based material. The sealing system may implement the features of any preceding embodiment or another embodiment disclosed herein. The sealing system may be implemented in various systems including valves, and pumps.

The preceding summary is provided for purposes of summarizing some embodiments to provide a basic understanding of aspects of the subject matter described herein. Accordingly, the above-described features are merely examples and should not be construed to narrow the scope or spirit of the subject matter described herein in any way. Moreover, the above and/or preceding embodiments may be combined in any suitable combination to provide further embodiments. Other features, aspects, and advantages of the subject matter described herein will become apparent from the following Detailed Description, Figures, and Claims.

### BRIEF DESCRIPTION OF THE FIGURES

Aspects, features and advantages of embodiments of the present disclosure will become apparent from the following description of embodiments in reference to the appended drawings in which like numerals denote like elements and wherein:
Figure 1 is a side cross-sectional view of an actuator, body and sealing system of an embodiment valve;
Figure 2 is an enlarged side cross-sectional view of a sealing system implemented on a needle valve;
Figure 3 is a cross-sectional view of a portion of a valve showing a sealing system according to a particularly suitable embodiment;
Figure 4 is an exploded diagram of a prior art ball valve; and
Figure 5 is a side cross-sectional view of a prior art needle valve.

### DETAILED DESCRIPTION OF EMBODIMENTS

Before describing several embodiments of the system, it is to be understood that the system is not limited to the details of construction or process steps set forth in the following description. It will be apparent to those skilled in the art having the benefit of the present disclosure that the system is capable of other embodiments and of being practiced or being carried out in various ways.

The present disclosure may be better understood in view of the following explanations:
As used herein the term **"valve"** may refer to a device that regulates, directs or controls the flow of a fluid by opening, closing, or partially obstructing various passageways of a fluid conduit, which has an inlet and outlet for the fluid. The valve can be implemented with various configurations including a needle, ball, gate or other type of valve.

As used herein the term **"fluid"** may refer to one or a combination of: a gas; liquid; a fluidized solid, and; slurry. The fluid is regulated by the valve.

As used herein the term **"body"** or **"housing"** may refer to one or a combination of components to house a valve actuation system, an actuation passageway, and a fluid conduit.

As used herein the term **"actuator"** or **"stem"** or **"plunger"** or **"spindle"** may refer to any object, including a rod or pipe, for actuation through the passageway of a valve element, which when actuated to regulates said fluid flow though the valve. The actuator may be actuated through the passageway with any suitable range of motion, including rotating and/or reciprocating.

As used herein the term **"graphite based material"** may refer to any material comprising graphite as a substantial/sole constituent. Typically the graphite based material is implemented as a graphite powder (e.g. with a particle size of 2 - 10 microns), which is sintered to a solid mass in the specific configuration of the seal, e.g. a ring. In other examples, solid sections of graphite are cut from a solid mass of crystalline graphite.

As used herein the term **"plastic based material"** may refer to any material comprising synthetic or semi-synthetic organic compounds that are malleable and so can be moulded into solid objects. It may include mouldable polymers. The plastic may be a substantial/sole constituent. It may include one or more of the following: a polyimide; polytetrafluoroethylene (PTFE), and; polyether ether ketone (PEEK).

As used herein the term **"polyimide-based material"** may refer to a material that comprises a polymer of imide monomers. It includes the Vespel™ range of materials as supplied by DuPoint.

As used herein the term **"hardness"** may refer to a hardness parameter determined based on indentation hardness of a material. In particular, the parameter may be determined by a conventional hardness scale test, such as the Rockwell scale, which determines the hardness by measuring a depth of penetration of an indenter under a large load compared to a penetration made by a preload.

As used herein the term **"permeability coefficient"** refers to a quantity determined based on a volume of an incompressible fluid that will flow in unit time through a unit cube of a porous substance across which a unit pressure difference is maintained, it is determined by the equation: (amount of permeate x film thickness) / (surface area x time x pressure drop) i.e.: cm³ x cm x cm⁻² x s⁻¹ x Pa⁻¹. It is measured in respect of Oxygen at 25 degrees Celsius. It may be measured in accordance with ASTM D1434 etc.

As used herein the term **"heat deflection temperature"** refers to a temperature determined by the following test procedure outlined in ASTM D648. The test specimen is loaded in three-point bending in the edgewise direction. The outer fibre stress used for testing is 1.82 MPa, and the temperature is increased at 2 °C/min until the specimen deflects 0.25 mm.

The deflection temperature is a measure of a polymer's ability to bear a given load at elevated temperatures. The deflection temperature is also known as the 'deflection temperature under load' (DTUL), 'heat deflection temperature', or 'heat distortion temperature' (HDT).

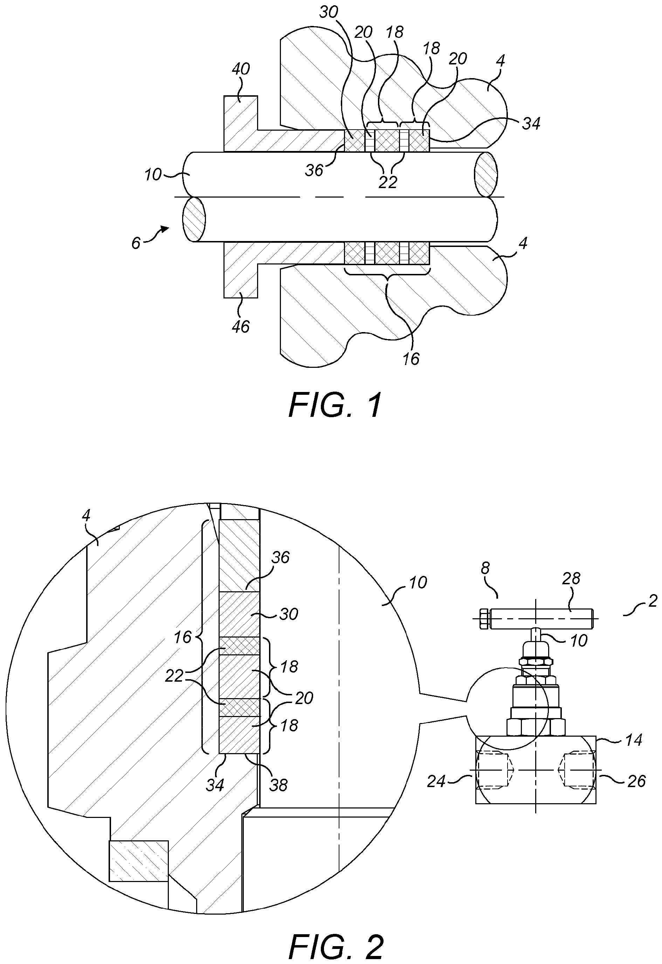

Referring to figures 1 and 2, a valve system **2** for regulation of a fluid (not illustrated) comprises a body **4** defining an actuator passageway **6.** An actuation system **8** includes an actuator **10** for actuation through the passageway **6** of a valve element (not illustrated) to regulate said fluid flow through a fluid conduit **14** of the valve **2.** A sealing system **16** is arranged to seal between the body **4** and actuator **10.**

The sealing system **16** includes a layered arrangement comprising two repeating units **18.** Each repeating unit **18** comprises a first layer of graphite based material **20** and an adjacent second layer of a plastic based material **22.**

In variant embodiments, which are not illustrated, other numbers of repeating units are implemented, including 1, 3, 4, 5 or 6 or more.

The fluid conduit **14** includes an inlet **24** and outlet **26,** with a passageway (not illustrated) therebetween regulated in cross-sectional area by the valve element to regulate the fluid flow therethrough. A handle **28** of the actuation system **8** is connected to the actuator **10** external the actuator passageway **6** for actuation of the actuator **10.**

In the example of figure 2, the valve element is a needle, implementing a needle valve. In variant embodiments, which are not illustrated, the sealing system is implemented on other valve configurations, e.g. a ball or gate.

The sealing system **16** of figure 2 includes two repeating units **18** and a further layer **30** of graphite based material at a second end **36** of the layered arrangement. In this way, a layer of plastic based material **22** does not form a periphery of the layered arrangement. Instead layers of graphite based material **20, 30** form said peripheries at a first end **34** and the second end **36** of the layered arrangement.

Referring to figure 1, the actuator passageway **6** includes a step **38** to define a cavity for receiving the sealing system **16.** The first end **34** of the sealing material **16** engages the step **38.** The second end **36** of the sealing material **16** is engaged by a pusher **40** which applies a compressive force to the sealing material **16** to hold it in place. The force applied by the pusher is typically set to restrain the maximum operating pressure of the fluid, e.g. 100 Bar.

In variant embodiments, which are not illustrated, the pusher is omitted.

The actuator **10** has a diameter of at least 8 mm and up to 80 -100 mm. The layers of the sealing system **16** are therefore dimensioned to seal around an actuator with this diameter. The graphite based material layers **20** have a thickness of 3 mm to 10 mm. The plastic based material layers **22** have a thickness of 1 mm to 10 mm.

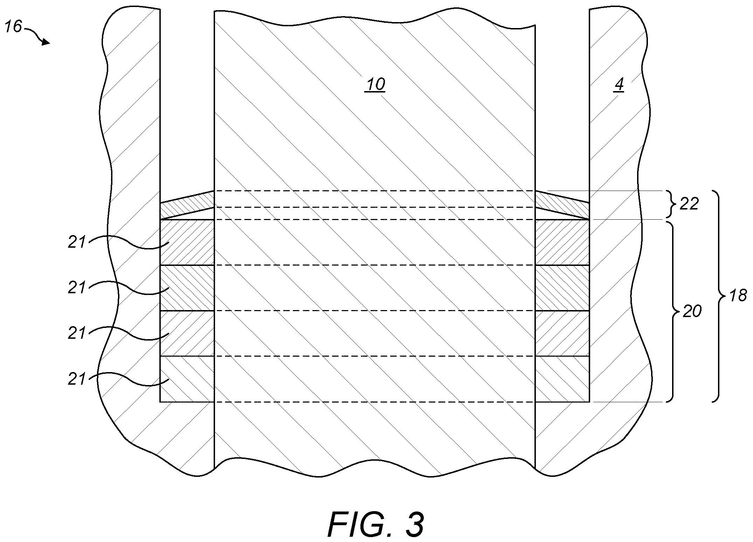

The layers **20, 22** are formed from discs. Suitably, as shown the discs have an internal aperture to form a circumferential, internal sealing face and through which the actuator is arranged, and a substantially circumferential external sealing face that seals against the body. As shown in Figures 1 and 2, suitably the discs are substantially planar wherein upper and lower surfaces are substantially parallel to the planar direction and the internal and external sealing faces are orthogonal to the upper and lower surfaces. In variant alternative embodiments, which are not illustrated, the discs are non-planar, for instance having other shapes that correspond to adjacent discs, including a chevron shape as is known in the art. Furthermore, According to Figure 3, the second layer of plastics material may be formed in a domed shape such that upper and lower surfaces are parallel but arranged at an angle to a radius of the central aperture. As will be appreciated, as the domed second layer of plastics material is compressed, the internal sealing face is caused to restrict the aperture and the external sealing face is caused to expand. This restriction and expansion during compression improves the seal between the body and actuator and the external an internal sealing faces respectively.

Still with reference to Figure 3, a particularly suitable embodiment of the sealing system 16 is shown. As explained above, the sealing system 16 fits in a bore of the body 4 and seals between the circumferential face of the bore and the actuator. Typically, the actuator and bore are substantially circular in cross-section and thus the sealing system has an external circumferential face and an central aperture forming an internal circumferential sealing face. As shown in Figure 3, the sealing system comprise one repeating unit 18. Here, the single repeating unit 18 comprises the first layer 20 of graphite based material arranged on a fluid side of the seal and the second layer 22 of plastics material arranged on the external side of the seal. In this exemplary embodiment, the first layer is formed from a plurality of homogenous discs 21 each formed of the graphite based material. As will be appreciated, it is possible to compress each disc individually to arrive at a layer having greater density as compared to the same total thickness being formed from fewer discs or a single disc as shown herein. As shown in figure 3, suitably the first layer comprises four homogenous discs 21. It is envisaged, each disc 21 would be a substantially planar disc.

As used in this specification, any formulation used of the style "at least one of A, B or C", and the formulation "at least one of A, B and C" use a disjunctive "or" and a disjunctive "and" such that those formulations comprise any and all joint and several permutations of A, B, C, that is, A alone, B alone, C alone, A and B in any order, A and C in any order, B and C in any order and A, B, C in any order. There may be more or less than three features used in such formulations.

In the claims, any reference signs placed between parentheses shall not be construed as limiting the claim. The word 'comprising' does not exclude the presence of other elements or steps then those listed in a claim. Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

Unless otherwise explicitly stated as incompatible, or the physics or otherwise of the embodiments, example or claims prevent such a combination, the features of the foregoing embodiments and examples, and of the following claims may be integrated together in any suitable arrangement, especially ones where there is a beneficial effect in doing so. This is not limited to only any specified benefit, and instead may arise from an "ex post facto" benefit. This is to say that the combination of features is not limited by the described forms, particularly the form (e.g. numbering) of the example(s), embodiment(s), or dependency of the claim(s). Moreover, this also applies to the phrase "in one embodiment", "according to an embodiment" and the like, which are merely a stylistic form of wording and are not to be construed as limiting the following features to a separate embodiment to all other instances of the same or similar wording. This is to say, a reference to 'an', 'one' or 'some' embodiment(s) may be a reference to any one or more, and/or all embodiments, or combination(s) thereof, disclosed. Also, similarly, the reference to "the" embodiment may not be limited to the immediately preceding embodiment.

The foregoing description of one or more implementations provides illustration and description, but is not intended to be exhaustive or to limit the scope of the invention to the precise form disclosed. Modifications and variations are possible in light of the above teachings or may be acquired from practice of various implementations of the present disclosure.

### LIST OF REFERENCES

**2** Valve system
   **4** Body
      **6** Actuator passageway
      **14** Fluid conduit
         **24** Inlet
         **26** Outlet
         **38** Step
   **40** Pusher
   **8** Actuation system
      **10** Actuator
      **28** Handle
   **16** Sealing system
      **18** Repeating unit
      **20** Graphite based material
      **21** Disc of graphite based material
      **22** Plastic based material
      **34** First end
      **36** Second end

## Claims

1. A valve system for regulation of a fluid flow, the valve system comprising:
a body defining a passageway;
an actuator for actuation through the passageway of a valve element to regulate the fluid flow though the valve, and;
a sealing system arranged to seal between the body and actuator,
wherein the sealing system includes a layered arrangement comprising one or more repeating units, each repeating unit comprising a first layer of graphite based material and an adjacent second layer of a plastic based material, each first layer and each second layer sealing between the body and the actuator.

2. The valve system of Claim 1, wherein the first layer of graphite based material comprises a plurality of homogenous elements.

3. The valve system of any preceding claim, wherein the sealing material is configured with a permeability coefficient as defined herein of less than 0.5 x 10⁻¹³.

4. The valve system of any preceding claim, wherein the plastic based material is selected to have a heat-deflection temperature as defined herein of above 200 degrees Celsius.

5. The valve system of any preceding claim, wherein the plastic based material has a hardness of greater than a hardness of the graphite based material.

6. The valve system of claim 4, wherein the plastic based material has a hardness of about or greater than E 45 - 105 on the Rockwell hardness scale.

7. The valve system of any preceding claim, wherein the layered arrangement comprises a layer of graphite based material arranged at first and second ends thereof.

8. The valve system of any preceding claim, wherein the plastic based material is a polyimide-based plastic, the polyimide-based plastic comprises 10 - 50 % by weight of graphite.

9. The valve system of claim 8, wherein the plastic based material is a polyimide-based plastic, the polyimide-based plastic comprises 10 - 20 % by weight of PTFE.

10. The valve system of any preceding claim, wherein the plastic based material is a polyimide-based plastic, the polyimide-based plastic comprises 10 - 20 % by weight of molybdenum disulfide solid lubricant.

11. The valve system of any preceding claim, wherein the sealing system is arrange to seal valves that have actuators that rotate or reciprocate with respect to the passageway.

12. The valve system of any preceding claim, wherein the actuator has a diameter of at least 8 mm and up to 80 -100 mm.

13. The valve system of any preceding claim, wherein the graphite based material has a thickness of 3 mm to 10 mm and the plastic based material has a thickness of 1 mm to 10 mm.

14. A method of forming a valve, the method comprising:
arranging a sealing system to seal between an actuator and a body,
the sealing system comprising one or more repeating units, each repeating unit comprising a first layer of graphite based material and an adjacent second layer of a plastic based material.

15. Use of a sealing system for sealing a passageway of a valve, wherein the sealing system includes a layered arrangement comprising one or more repeating units, each repeating unit comprising a first layer of graphite based material and an adjacent second layer of a plastic based material.
